**Europäisches Patentamt**

**European Patent Office**

**Office européen des brevets**

(19)

(11) Numéro de publication: **0 043 791**
A1

# DEMANDE DE BREVET EUROPEEN

(21) Numéro de dépôt: **81810126.3**

(22) Date de dépôt: **27.03.81**

(51) Int. Cl.³: **A 47 B 95/00,** F 16 B 12/00, D 06 F 39/12, F 24 C 15/08

(30) Priorité: **04.07.80 CH 5177/80**

(71) Demandeur: **Terraillon, Route de Thonon Juvigny, F-74100 Annemasse (FR)**

(43) Date de publication de la demande: **13.01.82 Bulletin 82/2**

(72) Inventeur: **Garrigues, André, Le Rochafon, F-74560 Monnetier Mornex (FR)**

(84) Etats contractants désignés: **AT BE CH DE FR GB IT LI LU NL SE**

(74) Mandataire: **Kirker, Gaylord E. et al, c/o KIRKER & CIE 14, Rue du Mont-Blanc Case postale 872, CH-1211 Genève 1 (CH)**

(54) **Dispositif d'habillage pour machines et appareils domestiques.**

(57)  Le dispositif comprend des pièces de bois (2, 3, 4, 5) destinées à être appliquées sur l'enveloppe (1) d'une machine ou d'un appareil domestique. Pour maintenir ces pièces de bois appliquées sur l'enveloppe, le dispositif comporte deux anneaux (8a, 8) présentant chacun une rainure (6, 9) dans laquelle s'engagent respectivement le bord inférieur et le bord supérieur des pièces de bois. Ces anneaux sont rendus solidaires de la partie inférieure et de la partie supérieure de l'enveloppe (1), par tous moyens connus. Ce dispositif évite les inconvénients inhérents à la fixation par collage des pièces de bois sur l'enveloppe (1).

EP 0 043 791 A1

ACTORUM AG

0043791

Affaire 41

- 1 -

Terraillon

**Dispositif d'habillage pour
machines et appareils domestiques**

La mode est actuellement d'utiliser du bois dans les aménagements de cuisine. Toutefois, lorsqu'il s'agit d'habiller des machines et appareils domestiques avec du bois, on se heurte à des difficultés pratiques sérieuses. En effet, si l'on colle les revêtements de bois sur une enveloppe métallique ou en matière plastique de la machine ou de l'appareil domestique, des déformations du bois et des décollements tendent à se produire sous l'effet de l'humidité régnant inévitablement dans les locaux où se trouvent les machines domestiques. En outre il y a des difficultés dues aux coefficients de dilatation différents du bois et de l'enveloppe de la machine. En outre les opérations de collage sont délicates et les revêtements de bois sont sujets soit à se décoller soit à se fendre sous l'effet des facteurs que l'on vient d'indiquer.

La présente invention vise à apporter une solution évitant ces inconvénients et elle a pour objet un dispositif d'habillage pour machines et appareils domestiques selon la revendication 1.

- 2 -

0043791

Le dessin annexé représente à titre d'exemple une forme d'exécution du dispositif selon l'invention.

Figure 1 en est une vue éclatée montrant les différents éléments avant assemblage.

Figure 2 est une vue en coupe transversale verticale de la machine selon figure 1, après assemblage des éléments constituant le dispositif d'habillage de cette machine.

Figure 3 est une vue en coupe verticale selon 3-3 de figure 2.

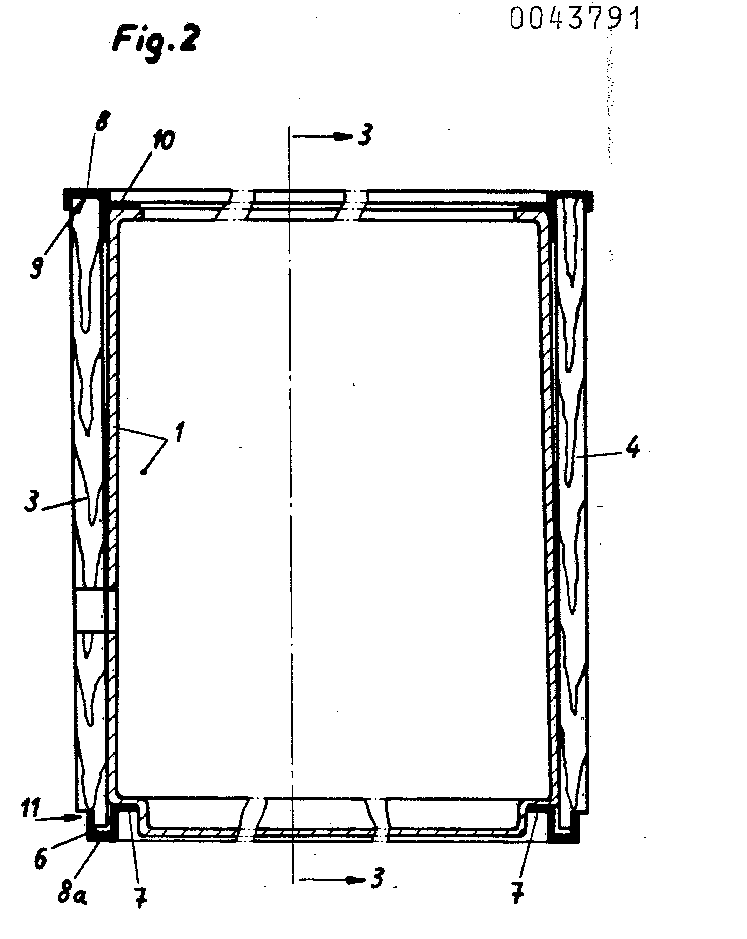

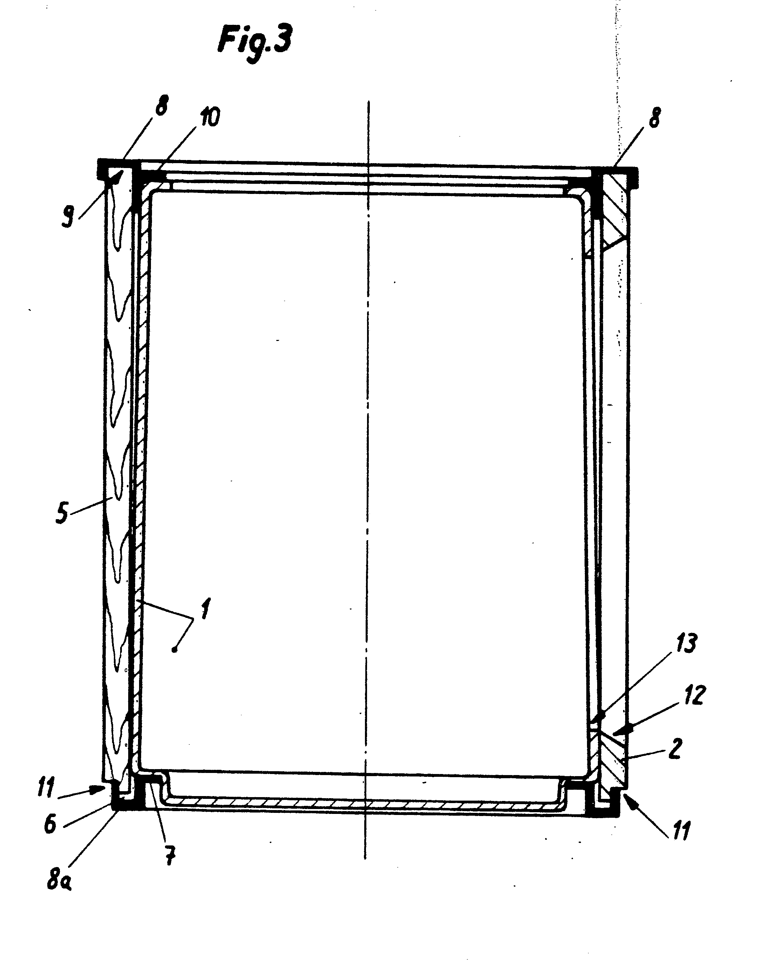

Dans l'exemple représenté on n'a montré que l'enveloppe 1 de la machine ou appareil domestique. La machine disposée à l'intérieur de cette enveloppe peut être par exemple une machine à laver, une balance domestique. L'enveloppe 1 peut être en métal ou en matière plastique. Il s'agit d'habiller cette machine avec des plaques de revêtement en bois, au nombre de quatre et représentées en 2 (plaque frontale), 3 et 4 (plaques latérales) et 5 (plaque arrière). A cet effet, le dispositif comporte une pièce annulaire de base 8a en métal ou en matière plastique, de forme rectangulaire et présentant une rainure 6 annulaire de section en forme de U. La coupe de cette pièce est visible sur les figures 2 et 3. Du côté intérieur de la rainure 6 la pièce 8a présente une bride horizontale 7 sur laquelle repose le bord du fond inférieur de l'enveloppe 1, comme on le voit sur les figures 2 et 3.

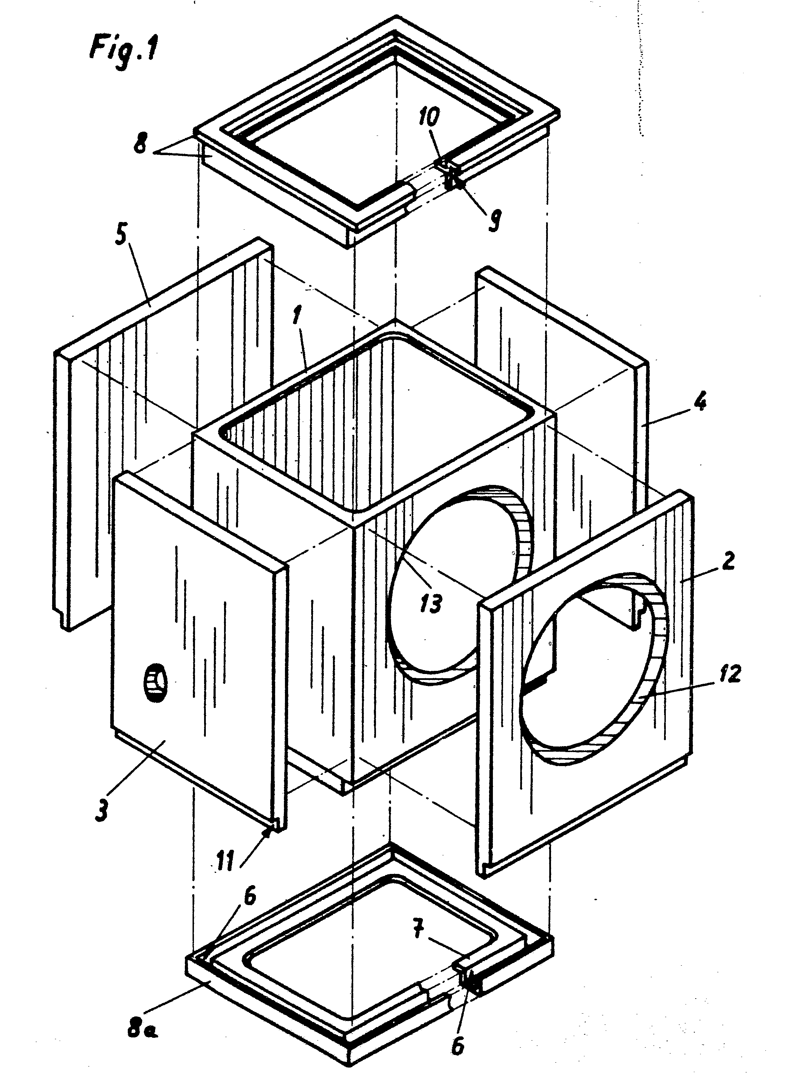

Le dispositif comporte en outre une pièce annulaire supérieure 8 en métal ou en matière plastique, de forme rectangulaire, comme on le voit sur la figure 1. Cette pièce 8 présente une rainure annulaire 9 de section en forme de U et une bride horizontale 10 destinée à reposer sur le bord supérieur de l'enveloppe 1, comme on le voit sur les figures 1 et 2. Pour réaliser l'habillage de la machine, on commence par placer l'enveloppe 1 sur l'anneau 8a puis on engage le bord inférieur des quatre plaques 2, 3, 4, 5 dans dans la rainure 6, entre les côtés latéraux du U, après quoi on met l'anneau supérieur 8 en place en emboîtant dans sa rainure 9, entre les côtés du U, le bord supérieur des plaques de bois 2, 3, 4, 5. Dès lors, il ne reste plus qu'à fixer la bride 10 de l'anneau 8 sur la partie supérieure de l'enveloppe 1, par vissage ou par soudage. Les plaques de bois habillant la machine sont alors maintenues bien en place et l'on évite tous les inconvénients dus au collage, aux différences de coefficient de dilatation entre le bois et le matériel de l'enveloppe, comme aussi le travail du bois sous l'effet des variations de l'humidité ambiante.

Dans cet exemple, la partie inférieure des plaques de bois présente un décrochement 11 grâce auquel une partie de la région inférieure de ces plaques déborde à l'extérieur de l'anneau 8a, ce qui contribue à l'esthétique.

L'anneau inférieur 8a constitue en fait le socle de la machine et l'enveloppe 1 peut être fixée sur lui par vissage ou par soudage par exemple.

Dans cet exemple, la plaque de garniture avant 2 présente un orifice circulaire 12 qui peut correspondre à la porte d'une machine à laver ou à une fenêtre laissant voir à travers elle la graduation circulaire d'une balance domestique venant se placer à l'intérieur de l'enveloppe 1 qui, elle, présente pareillement un trou circulaire 13 destiné à coïncider avec 12.

Dans une variante, l'enveloppe 1 pourrait ne pas être quadrangulaire, mais polygonale, voire même cylindrique. Dans ce dernier cas, les rainures telles que 6 et 9 seraient circulaires et les plaques de bois 2 - 5 seraient remplacées par des lattes relativement étroites disposées côte à côte selon une surface cylindrique.

- 4 -

REVENDICATIONS

1. Dispositif d'habillage pour machines et appareils domestiques, caractérisé en ce qu'il comporte des pièces de bois prévues pour être appliquées sur une enveloppe d'une machine ou appareil domestique, et deux anneaux présentant chacun des moyens pour coopérer avec l'une des extrémités des dites pièces de bois, pour maintenir ces pièces appliquées sur la dite enveloppe lorsque ces anneaux sont solidarisés de la dite enveloppe.

2. Dispositif selon la revendication 1, caractérisé en ce que les anneaux présentent chacun une section transversale en forme de U, pour recevoir, entre les branches latérales du U, l'une des extrémités des dites pièces de bois.

3. Dispositif selon la revendication 1 ou 2, caractérisé en ce que l'un des deux anneaux est disposé pour être escamoté sous un couvercle de la machine ou appareil domestique.

4. Dispositif selon la revendication 1 ou 2, caractérisé en ce que l'un des anneaux appartient à un socle sur lequel repose la dite enveloppe.

5. Dispositif selon la revendication 2, caractérisé en ce que les pièces de bois présentent à l'une au moins de leurs extrémités une entaille réduisant en cet endroit l'épaisseur de ces pièces, cette partie d'épaisseur réduite étant prévue pour s'engager entre les branches latérales du U d'un des anneaux.

6. Dispositif selon la revendication 1 ou 2, caractérisé en ce que les deux anneaux sont de forme quadrangulaire ou polygonale.

7. Dispositif selon la revendication 1 ou 2, caractérisé en ce que les anneaux sont de forme circulaire.

Fig.1

Terraillon

1/3

0043791   1/2

Fig.2

2/3

0043791

**Fig.3**

**Office européen des brevets**

**RAPPORT DE RECHERCHE EUROPEENNE**

EP 81 81 0126

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| | DE - A - 2 403 923 (PERMANEER CORP.)<br><br>* Pages 5-15; figures 1,2,3,5, 10 *<br><br>-- | 1,3,4 | A 47 B 95/00<br>F 16 B 12/00<br>D 06 F 39/12<br>F 24 C 15/08 |
| | NL - C - 19 774 (MARIANO PIETRO MALNESI)<br><br>* En entier *<br><br>-- | 1 | |
| | US - A - 2 505 117 (HOFFMANN)<br><br>* Colonnes 3,4 et figure 2 *<br><br>-- | 2 | DOMAINES TECHNIQUES RECHERCHES (Int. Cl.³)<br><br>A 47 B<br>F 16 B<br>D 06 F<br>F 24 C |
| | BE - A - 722 644 (SCHAFFNER)<br><br>* Revendications 1,2 et figures 1-3 *<br><br>-- | 1,2 | |
| A | DE - A - 2 365 027 (MIELE)<br><br>---- | | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 08-10-1981 | WETZEL |

OEB Form 1503.1 06.78